# EUROPÄISCHE PATENTSCHRIFT

(11) **EP 1 187 737 B1**
(45) Veröffentlichungstag und Bekanntmachung des Hinweises auf die Patenterteilung: **03.11.2004**
(21) Anmeldenummer: 01938035.1
(22) Anmeldetag: 23.03.2001
(51) Int. Cl.: B60N 2/22, B60N 2/44

(54) **MANUELLER HEBELANTRIEB FÜR STELLVORRICHTUNGEN AN SITZEN, INSBESONDERE AN KRAFTFAHRZEUGSITZEN**
MANUAL LEVER ACTUATING MECHANISM FOR ACTUATING ADJUSTING DEVICES ON SEATS, ESPECIALLY ON MOTOR VEHICLE SEATS
COMMANDE MANUELLE A LEVIER POUR DISPOSITIFS DE REGLAGE DE SIEGES, NOTAMMENT DE SIEGES DE VEHICULE MOTORISE

(30) Priorität: 20.04.2000 DE 10019854
(43) Veröffentlichungstag der Anmeldung: 20.03.2002
(73) Patentinhaber: KEIPER GmbH & Co. KG, 67657 Kaiserslautern (DE)
(72) Erfinder: ANGERMANN, Bernd, 42897 Remscheid-Lennep (DE); ANGERMANN, Dirk, 51469 Bergisch Gladbach (DE); BACKERT, Detlev, 50677 Köln (DE); STEMMER, Jürgen, 42119 Wuppertal (DE); LEIBELING, Christoph, 53721 Siegburg (DE); SCHÜLER, Rolf, 42579 Heiligenhaus (DE)
(74) Vertreter: Ludewig, Karlheinrich, Dipl.-Ing.
(86) Internationale Anmeldenummer: PCT/EP2001/003319
(87) Internationale Veröffentlichungsnummer: WO 2001/081113

(56) Entgegenhaltungen:
- EP-A- 0 908 349
- WO-A-00/55005
- DE-A- 19 646 317
- DE-C- 19 547 513
- US-A- 5 664 836

## Beschreibung

Die Erfindung betrifft einen manuellen Hebelantrieb für Stellvorrichtungen an Sitzen, insbesondere an Kraftfahrzeugsitzen, zur Umsetzung einer Hubbewegung in eine diskontinuierliche Rotationsbewegung unter Einbeziehung eines Schrittschaltgetriebes (s. zum Beispiel US-A-5 664 836, dem Oberbegriff entsprechend).

Bei Fahrzeugen heutiger Bauart werden zur Einstellung verschiedener Positionen, wie beispielsweise der Neigungseinstellung der Rückenlehne, der Sitzhöheneinstellung oder der Einstellung der Sitzflächenneigung häufig selbsthemmende Getriebe bzw. Gesperre eingesetzt. Selbsthemmende Getriebe, wie sie beispielsweise einfache Planetengetriebe darstellen, sind bei entsprechender Auslegung in der Lage, die durch einen eventuellen Unfall auftretenden Belastungen aufzunehmen, unabhängig davon, ob zum Unfallzeitpunkt ein Einstellvorgang erfolgt oder nicht. In vielen Fällen erfolgt die Einstellung letztlich mittels einer Rotationsbewegung, die jedoch aus Platzmangel vielfach nicht komfortabel einzuleiten ist. Als Beispiel sei hier das Problem der Bedienung eines Drehlehneneinstellers genannt, der über ein Betätigungshandrad einstellbar ist, das häufig so dicht an Karosserieinnenteilen angeordnet ist, dass eine ergonomische Bedienung nicht realisiert werden kann.

Schrittschaltgetriebe zur Umsetzung einer wechselseitigen Hubbewegung in eine diskontinuierliche Rotationsbewegung sind auf dem Gebiet der Kraftfahrzeugsitze bereits in verschiedenen Varianten im Einsatz, wobei häufig Klinkengesperre und Klemmrollenfreiläufe zur Anwendung kommen. Um eine ergonomische Bedienung zu erzielen, werden vielfach nach der Umsetzung der Hubbewegung in eine Rotationsbewegung rotatorische Über- bzw. Untersetzungsgetriebe verwendet, um Kräfte und Einstellgrößen zueinander in die erforderliche Relation zu bringen. Eine Vielzahl dieser eingesetzten Mechanismen benötigt zur korrekten Funktion interne Steuerwege zur ihrer Aktivierung, wie beispielsweise bei Zahnklinkengesperren erst eine Klinke in Eingriff gebracht werden muß, bevor die Bewegung letztlich übertragen werden kann. Somit kann von der gesamten, durch den Benutzer aufzubringenden Bewegung nur ein geringerer Anteil zur wirklichen Einstellung genutzt werden, wodurch der "mechanische Gesamtwirkungsgrad" sinkt.

Aus dem e.g. amerikanischen Patent US-A-5 664 836 ist eine Sitzverstellvorrichtung bekannt, bei der über eine Bewegung des Handhebels eine Neigungsverstellung des Sitzes bewirkt wird. Der Handhebel wird dabei um eine erste Drehachse verschwenkt. Ein mit dem Handhebel drehfest verbundenes Verbindungsglied ist andererseits auch drehfest mit einem die zweite Drehachse bildenden Schaft verbunden. Dieses Verbindungsglied kann bei Verschwenken des Handhebels eine Verschiebung einer auf dem Schaft angeordneten Nockenplatte bewirken, wobei der Ausgangsdrehwinkel gegenüber dem vom Handhebel eingeleiteten Winkel vergrößert ist. Durch die feste Anbindung des Verbindungsgliedes am Handhebel ist jedoch in nachteiliger Weise das erzielende Übersetzungsverhältnis festgelegt. In ähnlicher Weise wird bei dem nicht vorveröffentlichten Dokument WO 00/55005 A 1 ein durch die Konstruktion bestimmtes Übersetzungsverhältnis erzielt. Auch hier ist die Übersetzung nicht steuerbar.

Aufgabe der Erfindung ist es, einen manuellen Hebelantrieb für Stellvorrichtungen zu schaffen, der die vorgenannten Nachteile bekannter Systeme beseitigt, und bei dem insbesondere der Ausgangsdrehwinkel gegenüber dem in den Handhebel eingeleiteten Hubwinkel vergrößert wird und die zu erzielende Übersetzung steuerbar ist, d.h. die Übersetzung nicht über einen ganzen Stellhub, sondern innerhalb des Hubes Grad für Grad bewirkt werden kann.

Diese Aufgabe ist mit den im Patentanspruch 1 genannten Merkmalen gelöst. Denn zur Übersetzung der Wege bzw. der Drehwinkel wird ein als kinematisches Getriebe zu bezeichnender Hebelantrieb vor die Umsetzung der Hubbewegung in eine zu bezeichnender Hebelantrieb vor die Umsetzung der Hubbewegung in eine Rotationsbewegung geschaltet und damit zum einen eine sehr einfache, kostengünstigere Realisierung erzielt, und zum anderen wird bei entsprechender Wahl des Übersetzungsverhältnisses der im nachgeschalteten System erforderliche Steuerweg mit übersetzt, so daß am eigentlichen Betätigungselement das Verhältnis von Nutzweg zum Leerweg verbessert wird. Dabei ist die Betätigung eines solchen Hebelantriebes selbst bei geringen Platzverhältnissen komfortabel zu gestalten. Wesentlich sind bei der vorliegenden Lösung zwei Drehachsen, wobei auf der ersten Drehachse der Handhebel gelagert ist, während die zweite Drehachse das Antriebsglied für das Schrittschaltwerk darstellt, wobei mit diesem die zweite Drehachse bildenden Antriebsglied das Übersetzungsglied drehfest verbunden ist, das seinerseits durch den Handhebel betätigbar ist. Bedingt durch den Abstand der beiden Drehachsen zueinander und durch den Abstand der zweiten Drehachse zum Kontaktpunkt des Handhebels mit dem Übersetzungsglied ergibt sich bei Auslenkung des Handhebels um einen bestimmten Winkel ein wesentlich höherer Winkel am Übersetzungsglied und somit ein größerer Drehwinkel an der zweiten, das Schrittschaltwerk antreibenden Drehachse. Damit reduziert sich auch der für die Bedienungsperson spürbare Leerwinkel eines Systems, der im Verhältnis der vorgenannten Abstände reduziert wird.

Als Übersetzungsglied dient bei einem ersten Ausführungsbeispiel der Erfindung ein mit dem Antriebsglied drehfest verbundener Schwenkhebel, der mittels den Lastarm des Handhebels über- und untergreifende Mitnehmer durch den Handhebel im einen oder anderen Drehsinne verschwenkbar ist. Dabei sind die Mitnehmer des Schwenkhebels vorteilhaft als vom Schwenkhebel abragende und Steuerausnehmungen am Lastarm des Handhebels kontaktierende Zapfen ausgebildet.

Um nach jedem Schaltschritt den Schwenkhebel und damit auch den Handhebel in seine Ausgangslage zurückzuführen, weist der Schwenkhebel einen Rückstellarm auf, der von einem ortsfest gehalterten Federglied beaufschlagt und aus jeder Drehwinkellage in die Nullage rückstellbar ist. Dabei mag als Federglied eine am Gehäuse des Schrittschaltwerkes festgelegte Spiralfeder verwendet sein, die mit radial abragenden Federfingern den Rückstellarm des Schwenkhebels über- und untergreift.

Üblicherweise befindet sich die den Fahrzeugsitz einstellende Person auf dem Sitz und übt infolge ihres Gewichtes auf das Einstellelement eine Last aus, gegen welche die Position feinstufig eingestellt werden soll. Dazu ist eine entsprechend große Betätigungskraft aufzubringen, die jedoch im Empfinden des Sitzbenutzers normal und damit akzeptabel ist. Soll dagegen der Sitz von außen - wenn die Bedienungsperson neben dem Fahrzeug steht - eingestellt werden, so ist es erstrebenswert, mit wenigen Pumpbewegungen eine schnelle Verstellung des Sitzes zu erzielen. Diese beiden vorgenannten typischen, unterschiedlichen Betriebszustände erfordern bei konsequenter Umsetzung auch unterschiedliche Übersetzungsverhältnisse. Eine hohe Übersetzung von beispielsweise 1:4 im Falle des unbelasteten, schnell zu verstellenden Sitzes ist erstrebenswert, während beim unter Last zu verstellenden Sitz eine geringe Übersetzung mit dem Ziel der genauen, feinen Einstellung gewünscht wird. Zur Realisierung dieser Möglichkeiten ist nach einem weiteren Ausgestaltungsmerkmal der Erfindung der als Übersetzungsglied ausgebildete Schwenkhebel aus einem mit einer Hebellasche verbundenen Federschuh gebildet, der zwischen zwei im Abstand zueinander angeordneten Federschenkeln einen gekrümmte Steuerflächen aufweisenden Endabschnitt am Lastarm des Handhebels kontaktierend aufnimmt. Dabei sind die blattfederartigen Federschenkel dem Schwenkhebel fest zugeordnet, wobei der Kontakt zwischen den Steuerflächen am Lastarm des Handhebels und den Federschenkeln des Schwenkhebels der zweiten Drehachse näher liegt, als der Kontaktpunkt zwischen den Steuerflächen und den Federschenkeln bei etwas verschwenktem Lastarm des Handhebels. Dabei erfährt der beaufschlagte Federschenkel bei großer Gegenlast am Schwenkhebel eine solche Belastung, die zur Biegung der Feder um die Einspannstelle führt und im Zusammenspiel mit den entsprechend gekrümmten Steuerflächen am Endabschnitt des Lastarmes des Handhebels eine Verlagerung des Kontaktpunkte von der zweiten Drehachse weg nach hinten erfährt. Dies hat eine automatische Änderung des Übersetzungsverhältsnisses zur Folge. Die Übersetzung ändert sich lastabhängig durch Verwendung der nur beispielsweise zuvor genannten Federschenkel, die elastische Elemente innerhalb der Übertragungskette bilden. Somit wird bei einer derartigen Anordnung zunächst der Leerwinkel des dahinterliegenden Schrittschaltwerkes bei geringer Last und damit hoher Übersetzung schnell durchfahren, während die darauffolgende Belastung des Sitzeinstellelementes zu einer stufenlosen Reduzierung der Übersetzung und damit zu einer ergonomischen Bedienung führt.

Eine weitere, sich automatisch lastabhängig, jedoch in Stufen einstellende Übersetzung wird mit einem an der Hebellasche des Schwenkhebels festgelegten Federschuh erzielt, der einen U-förmigen Tragkörper aufweist, an dessen den Lastarm des Handhebels abstandsweise übergreifenden Schenkeln je eine mehrstufige Federklammer festgelegt ist, zwischen die der Lastarm des Handhebels mit Kontaktabschnitten während seiner Schwenkbewegung fortlaufend fasst Dabei kann jede Federklammer beispielsweise drei abstandsweise hintereinander angeordnete Kontakt- bzw. Klammerabschnitte aufweisen, die sukzessive enger werdend den Klemmvorsprünge aufweisenden Lastarm des Handhebels mit steigender Klemmkraft erfassen. Somit werden drei Belastungsstufen gebildet, wobei die einzelnen Klammerabschnitte so gestaltet sind, daß die zum Auseinanderdrücken der Klammerabschnitte erforderliche Kraft mit zunehmenden Abstand des betreffenden Klammerabschnittes von der zweiten Drehachse größer wird. Bei kleinen Abtriebsmomenten wird die Kraft über den der Drehachse nächstliegenden Klammerabschnitt übertragen, so daß bei kleinen Lasten eine große Übersetzung realisiert ist. Die an dieser Stelle übertragbare Kraft ist durch die Öffnungskraft des Klammerabschnitts begrenzt. Steigt nun die Abtriebslast auf ein Niveau über die übertragbare Kraft an dem ersten Klammerabschnitt, so wird die Kraft über den zweiten, von der Drehachse etwas entfernter liegenden Klammerabschnitt übertragen. Damit ist die Übersetzung an dieser Stelle kleiner als zuvor. Für die beispielsweise weitere, dritte Kontaktstelle des zugehörigen Klammerabschnitts gilt das Vorgenannte analog.

Statt eines sich bei Betätigung des Handhebels automatisch verändernden Übersetzungsverhältnisses ließe sich auch eine Einrichtung schaffen, bei der das Übersetzungsverhältnis bewußt angesteuert wird. Dies könnte beispielsweise dadurch geschehen, daß am Handhebel ein Druckknopf angeordnet ist, der über ein Schiebegestänge mit einem sowohl gegenüber dem Lastarm des Handhebels als auch gegenüber der Hebellasche verschiebbaren Kulissenkäfig verbunden ist, durch den bei Betätigung des Druckknopfs durch den Benutzer eine konstruktiv festgelegte Übersetzung aktiviert wird, um beispielsweise eine Schnelleinstellung bei hoher Übersetzung zu erzielen.

Die zuvor beschriebenen Ausführungsformen einer Übersetzungsmechanik sind Schrittschaltwerken vorgeschaltet. Statt dessen kann jedoch eine Ausführungsform eines Hebelantriebes vorgesehen sein, bei der das Schrittschaltwerk in eine spezielle Ausführungsform integriert ist. Zu diesem Zweck ist nach einer vorteilhaften Ausführungsform des Erfindungsgegenstandes das Übersetzungsglied aus einer mit der zweiten Drehachse drehfest verbundenen Wickelrolle und einer diese umfassenden Schlingfeder gebildet, wobei die Schlingfeder zu elastischen Mitnehmerarmen geformte Federenden aufweist, zwischen welche ein Kurvenkopf am Lastarm des Handhebels faßt. Dabei sind die Mitnehmerarme der Schlingfeder vorteilhaft durch jeweils ein Federglied im Sinne der Nullrückstellung beaufschlagt. Die elastischen Mitnehmerarme der Schlingfeder dienen jedoch nicht allein der Ansteuerung der Kupplungsfunktion, sondern sind gleichzeitig als sich belastungsabhängig biegende Kontaktflächen zum Kurvenkopf am Lastarm des Handhebels ausgebildet und ermöglichen somit eine hohe Funktionsintegration. Bei einer Schwenkbewegung des Lastarmes am Handhebel in der einen Richtung wird die Schlingfeder für diese Bewegungsrichtung geschlossen, und die Trommel bei anfänglich hoher Übersetzung mitgenommen, wobei sich das Übersetzungsverhältnis infolge des Abgleitens des Kurvenkopfes an dem jeweiligen Mitnehmerarm automatisch der Belastung anpaßt. Beim Zurückschwenken des Lastarmes am Handhebel wird der vorher angetriebene Mitnehmerarm vor dem Rückstellfederglied derart belastet, daß die Schlingfeder öffnet, und die Trommel somit nicht mehr angetrieben wird, sondern aufgrund von Reibung im nachgeschalteten Einstellelement des Sitzes in dieser Position verharrt. Da bei entsprechend entgegengesetzter Schwenkbewegung des Lastarmes am Handhebel die vorgenannte Wirkung ebenfalls, jedoch in anders gerichteter Bewegung stattfindet, ist ein beidseitig wirkendes Schrittschaltwerk mit integrierter, automatisch lastabhängiger Übersetzung realisiert.

Eine weitere Ausführungsform dieses, mit dem Hebelantrieb integrierten Schrittschaltwerkes läßt sich vorzugsweise erzielen, indem das Übersetzungsglied aus einem mit der zweiten Drehachse drehfest verbundenen Trommeltopf und einer darin angeordneten Schlingfeder gebildet ist, wobei die Schlingfeder zum Trommelmittelpunkt radial vorragende Mitnehmerarme an ihren Federenden aufweist, die von einer am Lastarm des Handhebels angeordneten Klaue übergriffen sind. Da je nach Ausführung des Sitzeinstellelementes die interne Reibung möglicherweise geringer ist, als die Reibung beim Zurückstellen der Schlingfeder, kann bei sonst gleicher Ausführung der Einsatz zweier, jeweils in einer Richtung wirkender Schlingfedern von Vorteil sein, so daß ggf. auf Rückstellfedern verzichtet werden kann.

Die Erfindung ist in Ausführungsbeispielen auf der Zeichnung dargestellt und wird nachfolgend näher erläutert. Es zeigen:
- Fig. 1: ein erstes Ausführungsbeispiel eines manuellen Hebelantriebes zur Einleitung eines unveränderlich übersetzten Stellhubes in ein Schrittschaltwerk, in einer schematischen, perspektivischen Darstellung,
- Fig. 1A: den aus Fig. 1 ersichtlichen Hebelantrieb in einer schematischen, verkleinerten Seitenansicht, wobei sich der Hebelantrieb in Nullstellung befindet,
- Fig. 1B: den in Fig. 1A dargestellten Hebelantrieb, ebenfalls in Seitenansicht in einer aus der Ruhelage ausgeschwenkten Stellung,
- Fig. 2: ein weiteres Ausführungsbeispiel eines Hebelantriebes, dessen Übersetzungsverhältnis während der Hebelverschwenkung selbsttätig, stufenlos veränderbar ist, ebenfalls in einer schematischen, perspektivischen Darstellung,
- Fig. 2A: den aus Fig. 2 ersichtlichen Hebelantrieb in einer schematischen, verkleinerten Seitenansicht, bei dem sich der Handhebel in Nullage befindet,
- Fig. 2B: den aus Fig. 2A ersichtlichen Hebelantrieb in einer Seitenansicht, bei dem durch Ausschwenken des Handhebels auch der Schwenkhebel in entsprechender Weise ausgelenkt ist,
- Fig. 3: eine Abwandlung des aus Fig. 2 ersichtlichen Hebelantriebes in einer schematischen, perspektivischen Darstellung, wobei der Schwenkhebel für ein mehrstufiges Übersetzungsverhältnis hergerichtet ist,
- Fig. 4: ein weiteres Ausführungsbeispiel eines Hebelantriebes, ebenfalls in einer schematischen, perspektivischen Darstellung, bei dem in das Übersetzungsglied das Schrittschaltwerk durch Verwendung einer Schlingfeder integriert ist,
- Fig. 4A: das aus Fig. 4 ersichtliche Schrittschaltwerk in einer schematischen, verkleinerten Seitenansicht, bei dem sich der mit einem Kurvenkopf versehene Lastarm des Handhebels in einer Nullstellung befindet,
- Fig. 5: ein weiteres Ausführungsbeispiel eines Hebelantriebes in einer schematischen, perspektivischen Darstellung, wobei sich eine vom Lastarm des Handhebels betätigbare Schlingfeder im Inneren eines Trommeltopfes befindet,
- Fig. 6: ein in Bezug auf Fig. 5 modifiziertes, analog dargestelltes Ausführungsbeispiel, bei dem das Übersetzungsverhältnis des Hebelantriebes auswählbar ist.

Zunächst wird darauf hingewiesen, daß bei den dargestellten Ausführungsformen nur die zum Verständnis des Erfindungsgegenstandes erforderlichen Bauteile dargestellt sind. Die für das Verständnis der Erfindung nicht erforderlichen Stellvorrichtungen in Form von nur beispielsweise genannten Stellbeschlägen zur Ein- und Verstellung der Rückenlehne eines Fahrzeugsitzes oder der Sitzhöheneinstellung oder der Einstellung der Sitzflächenneigung sind ebensowenig dargestellt, wie die Einzelheiten eines Schrittschaltwerkes, das in bekannter Art gestaltet sein kann.

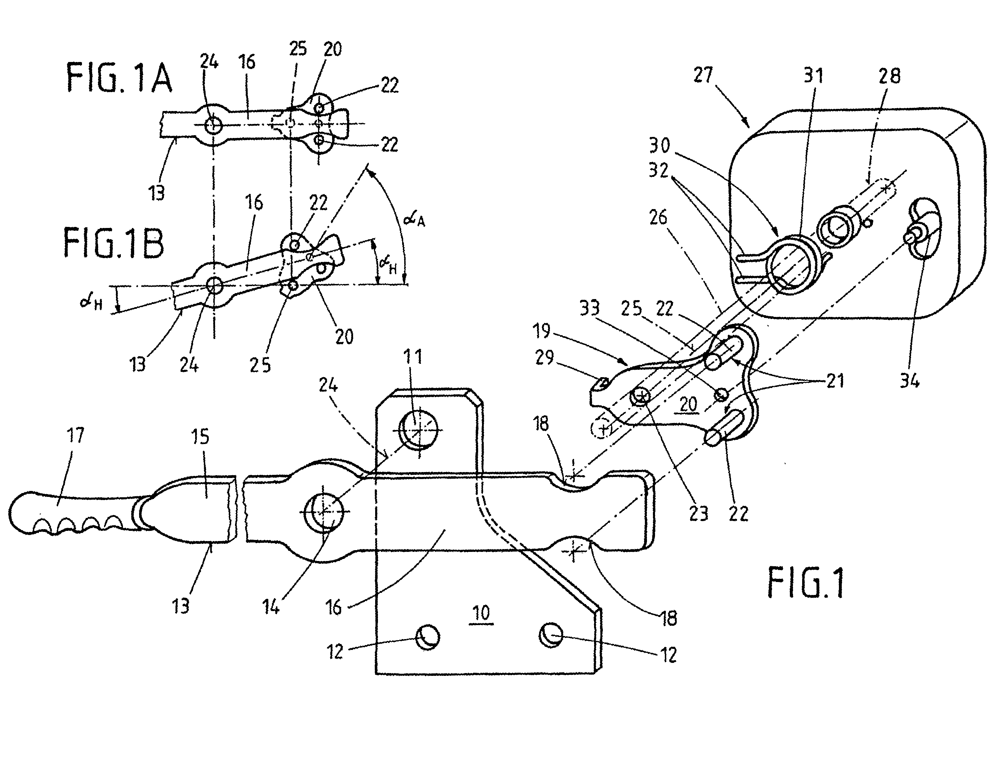

Der aus Fig. 1 ersichtliche Hebelantrieb weist einen über Befestigungsbohrungen 12 ortsfest festgelegten Tragarm 10 auf, dessen Lagerbohrung 11 von einem nicht dargestellten Lagerbolzen durchdrungen wird, der seinerseits die Aufnahmebohrung 14 eines Handhebels 13 drehlagert. Der Handhebel 13 ist gegenüber seinem Drehpunkt als zweiseitiger Hebel ausgebildet und weist einen mit einem Griffteil 17 versehenen Kraftarm 15 auf, der durch die Aufnahmebohrung 14 vom Lastarm 16 getrennt ist. Dieser Lastarm 16 weist in einem bestimmten Abstand zur Aufnahmebohrung 14 an seinen beiden einander gegenüberliegenden Längsseiten Steuerausnehmungen 18 auf, die von als Zapfen 22 ausgebildeten Mitnehmern 21 eines als Übersetzungsglied 19 fungierenden Schwenkhebels 20 kontaktierend über- bzw. untergriffen sind. In bestimmtem Abstand zur Ebene der Zapfen 22 ist in Richtung auf die durch die Zentren der Lagerbohrung 11 und der Aufnahmebohrung 14 gebildete erste Drehachse 24 im Schwenkhebel 20 eine Mitnahmebohrung 23 angeordnet, die drehfest mit einem eine zweite Drehachse 25 bildenden Antriebsglied 26 verbunden ist, das eine mit Profilierungen zur Drehmitnahme versehene und in ein Schrittschaltwerk 27 einmündende Welle sein mag. Die vom Antriebsglied 26 in das Schrittschaltwerk 27 eingeleitete Drehbewegung wird von dem Schrittschaltwerk über eine Abtriebswelle 28 an eine nicht dargestellte Stellvorrichtung weitergegeben, bei der es sich beispielsweise um einen Gelenkbeschlag zur Neigungseinstellung der Rückenlehne eines Fahrzeugsitzes handeln kann. An dem über die Mitnahmebohrung 23 hinausragenden Ende des Schwenkhebels 20 ist dieser mit einem abgewinkelten Rückstellarm 29 versehen, der durch ein ortsfest gehaltertes Federglied 30 aus jeder Drehwinkellage in die Nullage rückstellbar ist. Wie aus Fig. 1 ersichtlich ist, kann es sich bei dem Federglied 30 um eine am Gehäuse des Schrittschaltwerkes festgelegte Spiralfeder 31 handeln, die mit radial abragenden Federfingern 32 den Rückstellarm 29 des Schwenkhebels 20 über- und untergreift. Im Schwenkhebel 20 ist bei dem aus Fig. 1 ersichtlichen Ausführungsbeispiel zwischen den Zapfen 22 eine Mitnehmerbohrung 33 plaziert, mit welcher ein Sperrzapfen 34 des Schrittschaltwerkes 27 betätigt werden kann.

In Fig. 1A ist die als Nullstellung zu bezeichnende Ausgangslage dargestellt, bei der sowohl der Handhebel 13 als auch der als Übersetzungsglied 19 fungierende Schwenkhebel 20 keine Winkelauslegung erfahren. Erst wenn der Handhebel 13 um den aus Fig. 1B ersichtlichen Winkel αH - im vorliegenden Fall nach unten - verschwenkt wurde, ergibt sich durch Drehmitnahme der Zapfen 22 am als Übersetzungsglied 19 fungierenden Schwenkhebel 20 für die zweite Drehachse 25 ein Schwenkwinkel von αA. Aus der bloßen schematischen Darstellung von Fig. 1B wird ersichtlich, daß der Schwenkwinkel αA des Schwenkhebels 20 um ein Vielfaches größer ist, als der Schwenkwinkel αH des um die erste Drehachse 24 in diesem Winkel verschwenkten Handhebels 13. Die Größe der Übersetzung ist abhängig von dem Verhältnis der Abstände zwischen den Drehachsen 24 und 25 einerseits und zwischen der Drehachse 25 und dem Kraftangriffspunkt am jeweils beaufschlagten Zapfen 22.

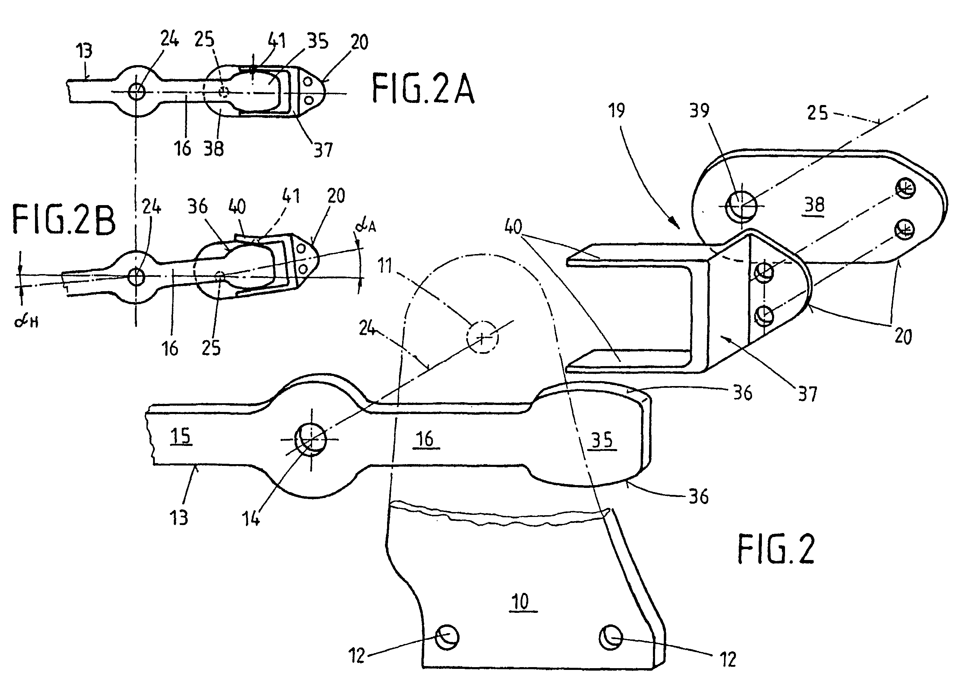

Bei dem aus Fig. 2 ersichtlichen Ausführungsbeispiel ist auch die erste Drehachse 24 durch die Lagerung des Handhebels 13 mit seiner Aufnahmebohrung 14 in bezug auf die Lagerbohrung 11 des Tragarmes 10 gegeben. Der Lastarm 16 des Handhebels 13 weist an seinem freien Ende einen Endabschnitt 35 auf, der sowohl an seiner Oberseite als auch an seiner Unterseite Steuerflächen 36 aufweist. Diese Steuerflächen 36 werden von einem Federschuh 37 übergriffen, der mit einer Hebellasche 38 verbunden ist und zusammen mit dieser einen Schwenkhebel 20 bildet, welcher das Übersetzungsglied 19 darstellt. Außer den Befestigungsbohrungen für den Federschuh 37 weist die Hebellasche 38 eine Mitnehmerbohrung 39 auf, in die ein zuvor erwähntes Antriebsglied des in Fig. 2 nicht dargestellten Schrittschaltwerkes drehmomentübertragend eingreift, wobei das Zentrum der Mitnehmerbohrung 39 und das Zentrum des Antriebsgliedes die zweite Drehachse 25 bilden. Der Federschuh 37 ist U-förmig gestaltet und weist gegenüber seinem Steg vorragende Federschenkel 40 auf, die mit den Steuerflächen 36 am Endabschnitt 35 des Lastarmes 16 vom Handhebel 13 kontaktieren.

Wenn nun ausgehend von der aus Fig. 2A ersichtlichen Nullstellung des Handhebels 13 dieser um den Winkel αH nach unten gedrückt wird, so wandert der Kontaktpunkt 41 der Steuerfläche 36 am Federschenkel 40 gegenüber der zweiten Drehachse 25 von dieser radial weg, in die aus Fig. 2B ersichtliche Lage. Dabei wird auch ggf. unter Aufbiegung des an der oberen Steuerfläche 36 anliegenden Federschenkels 40 der zum Übersetzungsglied 19 gehörende Schwenkhebel 20 um die zweite Drehachse 25 entgegen dem Uhrzeigerdrehsinn in die Winkellage αA nach oben verschwenkt, wobei auch die zweite Drehachse 25 um den Winkel αA verdreht wird. Wie insbesondere aus Fig. 2B zu entnehmen ist, ist der Winkel αA um ein Vielfaches größer als der Winkel αH. Da sich bei weiterer Verschwenkung des Handhebels 13 der Kontaktpunkt 41 auch weiter in radialer Richtung verlagern wird, erfolgt während der Schwenkbewegung des Handhebels 13 eine selbsttätige, stufenlose Veränderung des Übersetzungsverhältnisses, wodurch sich auch die Kraftverhältnisse im vorgenannten Sinne verändern.

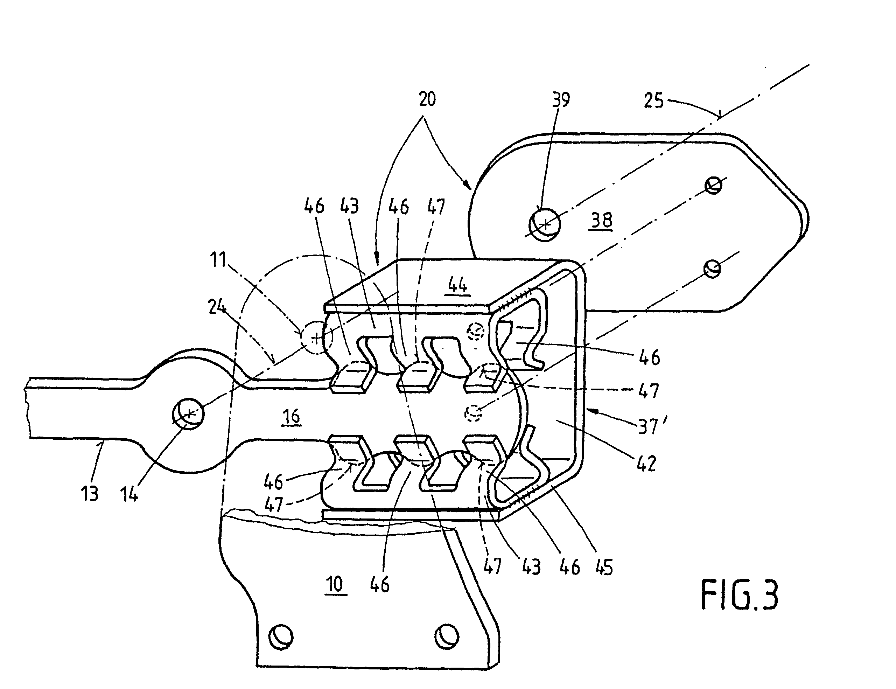

Eine gegenüber Fig. 2 modifizierte Ausführungsform ist in Fig. 3 dargestellt. Dort ist an der Hebellasche 38 ein modifizierter Federschuh 37' festgelegt, der zusammen mit der Hebellasche 38 wiederum den Schwenkhebel 20 bildet. Der Federschuh 37' setzt sich aus einem U-förmigen Tragkörper 42 und aus mehrstufigen Federklammern 43 zusammen, wovon jeweils eine Federklammer 43 an jedem Schenkel 44 bzw. 45 des Tragkörpers 42 festgelegt ist. Bei dem in Fig. 3 dargestellten Ausführungsbeispiel weist jede Federklammer 43 drei abstandsweise hintereinander angeordnete Kontaktabschnitte 46 auf, die klammerartig gestaltet sind und mit dem Lastarm 16 des Handhebels 13 bei dessen Verschwenkung in Kontakt kommen können. Dabei ist der jeweilige, der ersten Drehachse 24 nächstliegende Kontaktabschnitt 46 weiter aufgebogen als der folgende, und dieser wiederum etwas weiter aufgebogen als der abschließende, am weitesten von der Drehachse entfernte Kontaktabschnitt 46. Dabei weist der Lastarm 16 vorteilhaft an den mit den Kontaktabschnitten 46 zusammenwirkenden Stellen Klemmvorsprünge 47 auf, die bei entsprechender Belastung zwischen die jeweiligen Kontaktabschnitte 46 der Federklammer 43 eindringen können und somit den Schwenkhebel 20 mit seiner Hebellasche 38 in einer Weise verschwenken, daß die zweite Drehachse 25 eine entsprechende Winkelverdrehung erfährt und diese an das ebenfalls nicht dargestellte Schrittschaltwerk überträgt. Bei geringer Krafteinwirkung durch die Stellvorrichtung auf den Hebelantrieb wird bei Auslenkung des Handhebels 13 nur der vordere, je nach Schwenkrichtung des Handhebels über oder unter dem Lastarm 16 liegende Kontaktabschnitt 46 zur Schwenkbewegung durch den betreffenden Klemmvorsprung 47 betätigt. Erst wenn eine größere Kraft auf den Schwenkhebel 20 einwirkt, dringt an der der ersten Drehachse 24 nächstliegende Klemmvorsprung 47 zwischen die Federschenkel des zugehörigen ersten Kontaktabschnitts 46 ein, so daß der nachfolgende zweite Kontaktabschnitt durch den Lastarm 16 belastet wird, bis die Kraft so weit steigt, daß letztlich auch der am entferntesten von der ersten Drehachse 24 liegende dritte Kontaktabschnitt 46 belastet wird. Somit ist auch bei dieser Lösung ein veränderliches Übersetzungsverhältnis wirksam, das jedoch nicht kontinuierlich, sondern in Stufen verändert wird. Ansonsten stellen sich auch hier die bei den zuvor beschriebenen Ausführungsbeispielen vorhandenen Winkelverhältnisse ein.

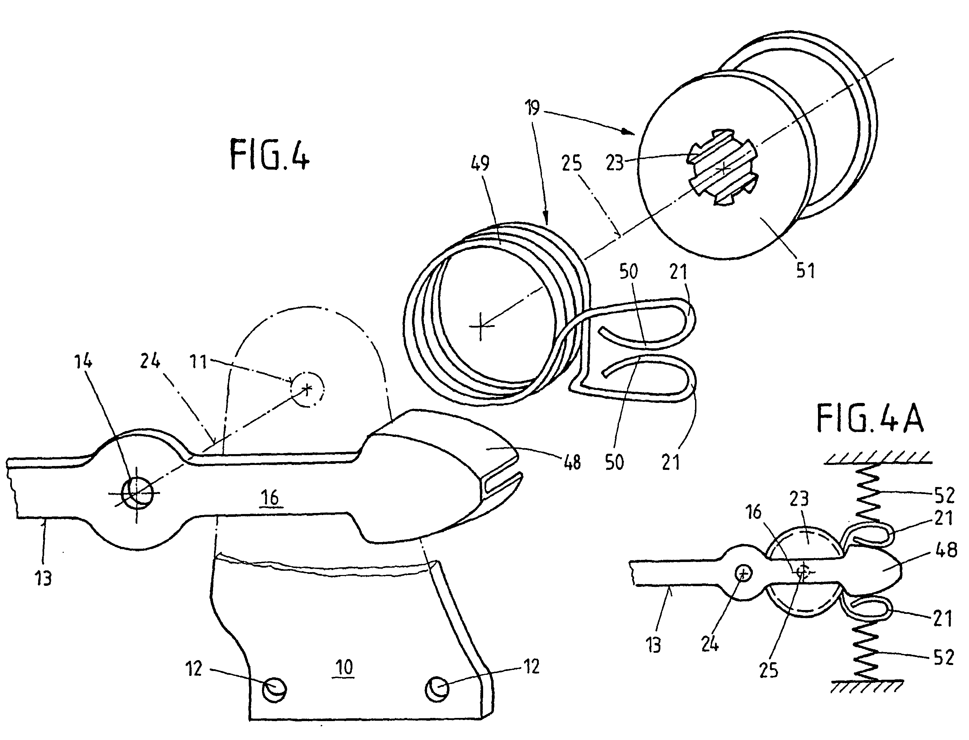

Bei dem aus den Fig. 4 und 4A ersichtlichen Ausführungsbeispiel ist der Handhebel 13 wiederum auf einer ersten Drehachse 24 am ortsfesten Tragarm 10 gelagert. Der Lastarm 16 dieses Handhebels 13 weist an seinem freien Ende einen Kurvenkopf 48 auf, der zwischen die zu elastischen Mitnehmern 21 geformte Federenden 50 einer Schlingfeder 49 faßt. Die Schlingfeder 49 ist ihrerseits auf dem Mantel einer Wickelrolle 51 angeordnet und nimmt diese durch Haftreibung infolge ihrer Federkraft im Falle einer Verschwenkung eines Mitnehmers 21 im entsprechenden Drehsinn mit. Die Wickelrolle 51 weist in ihrem Zentrum eine z.B. profilierte Mitnahmebohrung 23 auf, die wiederum ein Antriebsglied für die Stellvorrichtung aufnimmt. Das Zentrum dieser Mitnahmebohrung ist als zweite Drehachse 25 anzusehen, die von der den Handhebel 13 am Tragarm 10 lagernden ersten Drehachse 24 entfernt angeordnet ist. Jeder Mitnehmer der Schlingfeder 49 ist zum Zwecke der Nullrückstellung von einem ortsfest abgestützten Federglied 52 beaufschlagt (Fig. 4A). Bei Einleitung einer Hubbewegung in den Handhebel 13 wird über den Kurvenkopf 48 der jeweilige Mitnehmer 21 der Schlingfeder 49 verschwenkt, wodurch eine Drehmitnahme der Wickelrolle 51 im entsprechenden Verschwenkungssinne erfolgt und damit schließlich auch das die zweite Drehachse 25 bildende Antriebsglied mit verdreht wird. Über die Kurve des Kurvenkopfes 48 und das entsprechend geformte Federende 50 erfolgt während der Schwenkbewegung des Handhebels 13 eine selbsttätige, kontinuierliche Veränderung des Übersetzungsverhältnisses vom Auslenkungswinkel des Handhebels 13 ausgehend zum Auslenkungswinkel des vom Kurvenkopf 48 beaufschlagten Mitnehmers 21 der Schlingfeder. Wird nun der Handhebel 13 nach erfolgter Auslenkungsbewegung kraftlos gestellt, so erfolgt eine Rückführung des jeweiligen Mitnehmers. 21 und damit eine Rückstellung des Handhebels 13 in die aus den Fig. 4 und 4A ersichtliche Lage, ohne daß die Wickelrolle 51 verdreht wird, sofern eine selbsthemmende Stellvorrichtung der Wickeltrommel 51 nachgeschaltet ist und somit das mit der Mitnehmerbohrung 23 verbundene Antriebsglied festgehalten wird.

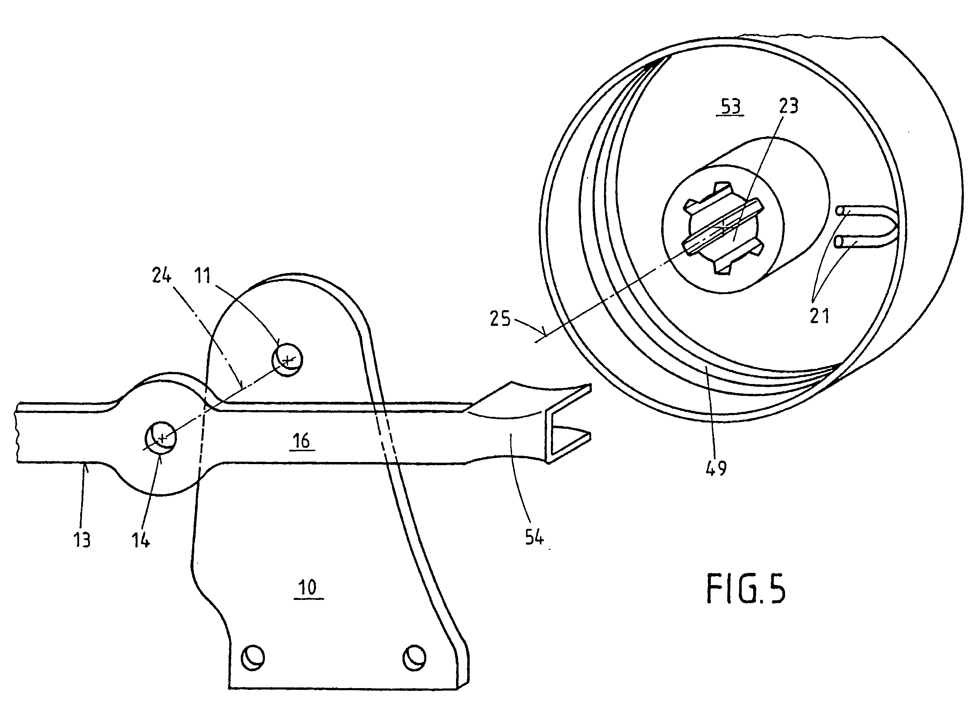

Das aus Fig. 5 ersichtliche Ausführungsbeispiel ist wiederum eine Modifikation des aus den Fig. 4 und 4A ersichtlichen Ausführungsbeispieles. Auch in diesem Falle ist der Handhebel 13 über eine erste Drehachse 24 am ortsfest angeordneten Tragarm 10 gelagert. Die zweite Drehachse 25 wird durch ein in der Mitnahmebohrung 23 angeordnetes, jedoch in Fig. 5 nicht dargestelltes Antriebsglied gebildet, wobei die Mitnahmebohrung 23 Bestandteil eines Trommeltopfes 53 ist, in dessen Innenraum eine Schlingfeder 49 angeordnet ist. Hierbei bilden Schlingfedern 49 und Trommeltopf 53 das Übersetzungsglied 19. Auch diese Schlingfeder 49 weist zu Mitnehmern 21 geformte Federenden auf, die von einer Klaue 54 am Ende des Lastarmes 16 des Handhebels 13 übergriffen sind. Die Funktionsweise dieser Ausführungsform erfolgt in gleicher Weise wie bei dem aus den Fig. 4 und 4A ersichtlichen Ausführungsbeispiel.

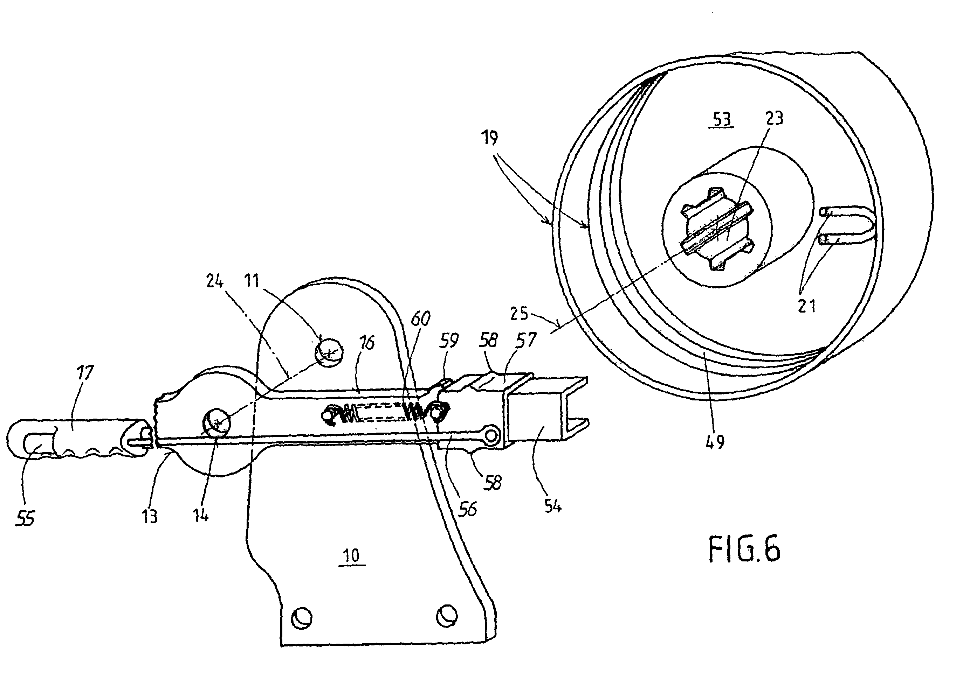

Das aus Fig. 6 ersichtliche Ausführungsbeispiel stellt seinerseits eine Abwandlung des aus Fig. 5 ersichtlichen Ausführungsbeispieles dar. Dort ist die Klaue 54 als Führungsschiene am Lastarm 16 des Handhebels 13 hergerichtet, auf der ein Kulissenkäfig 57 verschiebbar angeordnet ist, wobei der Schiebeweg in Richtung auf die erste Drehachse 24 durch einen Anschlag 59 am Lastarm 16 begrenzt ist. An den Kulissenkäfig 57 ist ein Schiebegestänge 56 angeschlossen, das mit einem am Griffteil 17 angeordneten Druckknopf 55 verbunden ist. Beim Niederdrücken des Druckknopfes 55 wird der Kulissenkäfig 58 mit seinen Kontaktpunkten 58 für die Anlage an den Mitnehmern 21 bildenden Wulsten in bezug auf die zweite Drehachse 25 nach hinten verschoben, so daß sich das Übersetzungsverhältnis ändert. Somit kann die Bedienungsperson das Übersetzungsverhältnis über die aus den Bauteilen 55, 56, 57 gebildete Betätigungsvorrichtung wählen und durch Gedrückthalten des Druckknopfes 55 beibehalten. Erst nach Loslassen des Druckknopfes 55 gelangt der Kulissenkäfig 57 infolge der zwischen Kulissenkäfig 57 und Lastarm 16 des Handhebels 13 geschaltete Rückholfeder 60 wieder in die aus Fig. 6 ersichtliche Ausgangslage. Die Rückholfeder könnte verständlicherweise auch zur Beaufschlagung des Druckknopfes 55 im Handgriff 17 integriert sein.

### Bezugszeichenliste:

- 10: Tragarm
- 11: Lagerbohrung, in 10
- 12: Befestigungsbohrung, in 10
- 13: Handhebel
- 14: Aufnahmebohrung, in 13
- 15: Kraftarm, von 13
- 16: Lastarm, von 13
- 17: Griffteil, an 15
- 18: Steuerausnehmung, an 16
- 19: Übersetzungsglied
- 20: Schwenkhebel
- 21: Mitnehmer
- 22: Zapfen
- 23: Mitnahmebohrung
- 24: Drehachse, erste
- 25: Drehachse, zweite
- 26: Antriebsglied
- 27: Schrittschaltwerk
- 28: Abtriebsglied
- 29: Rückstellarm, an 20
- 30: Federglied
- 31: Spiralfeder
- 32: Federfinger
- 33: Mitnehmerbohrung
- 34: Sperrzapfen
- 35: Endabschnitt, von 16
- 36: Steuerfläche
- 37: Federschuh
- 37': Federschuh
- 38: Hebellasche
- 39: Mitnehmerbohrung
- 40: Federschenkel
- 41: Kontaktpunkt
- 42: Tragkörper
- 43: Federklammer
- 44: Schenkel, von 42
- 45: Schenkel, von 42
- 46: Kontaktabschnitt, an 43
- 47: Klemmvorsprung
- 48: Kurvenkopf
- 49: Schlingfeder
- 50: Federende, von 49
- 51: Wickelrolle
- 52: Federglied
- 53: Trommeltopf
- 54: Klaue
- 55: Druckknopf
- 56: Schiebegestänge
- 57: Kulissenkäfig
- 58: Kontaktpunkt
- 59: Anschlag
- 60: Rückholfeder

## Patentansprüche

1. Manueller Hebelantrieb für Stellvorrichtungen an Sitzen, insbesondere Kraftfahrzeugsitzen, zur Umsetzung einer Hubbewegung in eine diskontinuierliche Rotationsbewegung unter Einbeziehung eines Schrittschaltwerkes (27), dessen Abtriebsglied (28) mit einem rotatorisch bewegbaren Stellglied der Stellvorrichtung gekuppelt ist, während das Antriebsglied (26) des Schrittschaltwerkes (27) mit einem von einem Handhebel (13) betätigten Übersetzungsglied (19) drehmomentübertragend verbunden ist, wobei der Handhebel (13) an einem Tragarm (10) um eine erste Drehachse (24) schwenkbar gelagert ist,
das Übersetzungsglied (19) mit dem eine zweite Drehachse (25) bildenden Antriebsglied (26) drehfest verbunden ist
und wobei bei Auslenkung des Lastarms (16) des Handhebels (13) um einen Schwenkwinkel (αH) das auf einer zweiten Drehachse (25) angeordnete Übersetzungsglied (19) in eine den zugehörigen Drehwinkel (αA) der das Antriebsglied (26) des Schrittschaltwerkes (27) aufnehmenden zweiten Drehachse (25) gegenüber dem Schwenkwinkel (αH) vergrößernde Schwenkbewegung überführt wird,
**dadurch gekennzeichnet, dass**
der Lastarm (16) des Handhebels (13) im Abstand zur Drehachse (24) an seinen einander gegenüberliegenden Längsseiten Steuerflächen (18, 36, 48, 54) aufweist, die von Mitnehmern (21, 40) des Übersetzungsgliedes (19) kontaktierend über- bzw. untergriffen sind.

2. Hebelantrieb nach Anspruch 1, **dadurch gekennzeichnet, dass** das Übersetzungsglied (19) als mit dem Antriebsglied (26) drehfest verbundener Schwenkhebel (20) ausgebildet ist, der mittels den Lastarm (16) des Handhebels (13) über- und untergreifende Mitnehmer (21) durch den Handhebel (13) im einen oder anderen Drehsinne verschwenkbar ist.

3. Hebelantrieb nach Anspruch 2, **dadurch gekennzeichnet, dass** die Mitnehmer (21) des Schwenkhebels (20) als vom Schwenkhebel abragende, und Steuerausnehmungen (18) am Lastarm (16) des Handhebels (13) kontaktierende Zapfen (22) ausgebildet sind.

4. Hebelantrieb nach Anspruch 2 oder 3, **dadurch gekennzeichnet, dass** der Schwenkhebel (20) einen Rückstellarm (29) aufweist, der von einem ortsfest gehalterten Federglied (30) beaufschlagt und aus jeder Drehwinkellage in die Nullage rückstellbar ist.

5. Hebelantrieb nach Anspruch 4, **dadurch gekennzeichnet, dass** als Federglied (30) eine am Gehäuse des Schrittschaltgetriebes (27) festgelegte Spiralfeder (31) verwendet ist, die mit radial abragenden Federfingern (32) den Rückstellarm (29) des Schwenkhebels (20) über- und untergreift.

6. Hebelantrieb nach Anspruch 1 oder 2, **dadurch gekennzeichnet, dass** der als Übersetzungsglied (19) ausgebildete Schwenkhebel (20) aus einem mit einer Hebellasche (38) verbundenen Federschuh (37) gebildet ist, der zwischen zwei im Abstand zueinander angeordneten Federschenkeln (40) einen gekrümmte Steuerflächen (36) aufweisenden Endabschnitt (35) am Lastarm (16) des Handhebels (13) kontaktierend aufnimmt.

7. Hebelantrieb nach Anspruch 6, **dadurch gekennzeichnet, dass** der an der Hebellasche (38) des Schwenkhebels (20) festgelegte Federschuh (37) einen U-förmigen Tragkörper (42) aufweist, an dessen den Lastarm (16) des Handhebels (13) abstandsweise übergreifenden Schenkeln (44, 45) je eine mehrstufige Federklammer (43) festgelegt ist, zwischen die der Lastarm (16) des Handhebels (13) mit Kontaktabschnitten (46) während seiner Schwenkbewegung fortlaufend faßt.

8. Hebelantrieb nach Anspruch 7, **dadurch gekennzeichnet, dass** jede Federklammer (43) drei abstandsweise hintereinander angeordnete Kontaktabschnitte (46) aufweist, die fortlaufend enger werdend, den Klemmvorsprünge (47) aufweisenden Lastarm (16) des Handhebels (13) mit steigender Klemmkraft erfassen.

9. Hebelantrieb nach Anspruch 1, **dadurch gekennzeichnet, dass** das Übersetzungsglied (19) aus einer mit der zweiten Drehachse (25) drehfest verbundenen Wickelrolle (51) und einer diese umfassenden Schlingfeder (49) gebildet ist, und die Schlingfeder (49) zu elastischen Mitnehmern (21) geformte Federenden (50) aufweist, zwischen die ein Kurvenkopf (48) am Lastarm (16) des Handhebels (13) faßt.

10. Hebelantrieb nach Anspruch 9, **dadurch gekennzeichnet, dass** die Mitnehmer (21) der Schlingfeder (49) durch jeweils ein Federglied (52) im Sinne der Nullrückstellung beaufschlagt sind.

11. Hebelantrieb nach Anspruch 1, **dadurch gekennzeichnet, dass** das Übersetzungsglied (19) aus einem mit der zweiten Drehachse (25) drehfest verbundenen Trommeltopf (53) und einer darin angeordneten Schlingfeder (49) gebildet ist und die Schlingfeder (49) zum Trommelmittelpunkt radial vorragende Mitnehmer (21) an ihren Federenden aufweist, die von einer am Lastarm (16) des Handhebels (13) angeordneten Klaue (54) übergriffen sind.

12. Hebelantrieb nach Anspruch 11, **dadurch gekennzeichnet, dass** die Lage eines an einer verschiebbaren Kulisse (57) gebildeten Kontaktpunktes (58) zwischen dem Handhebel (13) und dem Übersetzungsglied (19) mittels weiterer Betätigungsvorrichtung (55, 56, 57) bewußt von der Bedienungsperson wählbar ist.

## Claims

1. A manual lever drive for adjusting devices on seats, in particular motor vehicle seats, for converting a lifting movement into a discontinuous rotational movement, incorporating a step-by-step mechanism (27), whose output member (28) is coupled to a rotationally movable actuator of the adjusting device, while the input member (26) of the step-by-step mechanism (27) is connected for torque transmission to a transmission member (19) actuated by a manual lever (13), wherein the manual lever (13) is mounted on a support arm (10) so as to be swivellable about a first axis of rotation (24),
the transmission member (19) is connected for rotation to the input member (26) forming a second axis of rotation (25)
and wherein, when the work arm (16) of the manual lever (13) is deflected by a swivel angle (αH), the transmission member (19) arranged on a second axis of rotation (25) is caused to perform a swivel movement enlarging relative to the swivel angle (αH) the associated pivot angle (αA) of the second axis of rotation (25) on which is arranged the input member (26) of the step-by-step mechanism (27), **characterised in that**
at a distance from the axis of rotation (24), the work arm (16) of the manual lever (13) comprises control surfaces (18, 36, 48, 54) on its mutually opposing longitudinal sides, which surfaces (18, 36, 48, 54) are gripped from above or below in contacting manner by followers (21, 40) of the transmission member (19).

2. A lever drive according to claim 1, **characterised in that** the transmission member (19) takes the form of a swivel lever (20) connected for rotation with the input member (26), which swivel lever (20) may be swivelled in one or other direction of rotation by the manual lever (13) by means of followers (21) gripping the work arm (16) of the manual lever (13) from above and below.

3. A lever drive according to claim 2, **characterised in that** the followers (21) of the swivel lever (20) take the form of pins (22) projecting from the swivel lever and contacting control recesses (18) on the work arm (16) of the manual lever (13).

4. A lever drive according to claim 2 or 3, **characterised in that** the swivel lever (20) comprises a resetting arm (29), which is acted on by a stationarily mounted spring member (30) and may be reset from any pivot angle position into the neutral position.

5. A lever drive according to claim 4, **characterised in that** the spring member (30) takes the form of a spiral spring (31) fixed to the housing of the step-by-step mechanism (27), which spiral spring (31) grips the resetting arm (29) of the swivel lever (20) from above and below with radially projecting spring fingers (32).

6. A lever drive according to claim 1 or 2, **characterised in that** the swivel lever (20) constructed as a transmission member (19) takes the form of a spring saddle (37) connected to a lever bracket (38), which spring saddle (37) accommodates in contacting manner between two spring legs (40) arranged at a distance from one another an end portion (35) comprising curved control surfaces (36) of the work arm (16) of the manual lever (13).

7. A lever drive according to claim 6, **characterised in that** the spring saddle (37) fixed to the lever bracket (38) of the swivel lever (20) comprises a U-shaped support body (42), to each of whose legs (44, 45), which engage spacedly over the work arm (16) of the manual lever (13), there is fixed a multistage spring clip (43), between which clips (43) the work arm (16) of the manual lever (13) engages continuously with contact portions (.46) during its pivot movement.

8. A lever drive according to claim 7, **characterised in that** each spring clip (43) comprises three contact portions (46) arranged spacedly one behind the other, which portions (46), narrowing continuously, grip the work arm (16), comprising clamping projections (47), of the manual lever (13) with increasing clamping force.

9. A lever drive according to claim 1, **characterised in that** the transmission member (19) is formed of a spool body (51) connected for rotation with the second axis of rotation (25) and of a wrap spring (49) surrounding said spool body (51), and the wrap spring (49) comprises spring ends (50) shaped into resilient followers (21), between which spring ends (50) there engages a curved head (48) of the work arm (16) of the manual lever (13).

10. A lever drive according to claim 9, **characterised in that** the followers (21) of the wrap spring (49) are each acted on by a spring member (52) in the direction of the neutral reset position.

11. A lever drive according to claim 1, **characterised in that** the transmission member (19) is formed of a drum-shaped cup (53) connected for rotation with the second axis of rotation (25) and of a wrap spring (49) arranged therein and the wrap spring (49) comprises at its spring ends followers (21) projecting radially towards the centre of the drum, over which followers (21) there engages a claw (54) arranged on the work arm (16) of the manual lever (13).

12. A lever drive according to claim 11, **characterised in that** the position between the manual lever (13) and the transmission member (19) of a contact point (58) formed on a displaceable connecting link (57) may be selected as desired by the operator by means of further actuating devices (55, 56, 57).

## Revendications

1. Commande manuelle à levier pour dispositifs de réglage montés sur des sièges, en particulier des sièges de véhicules automobiles, pour la conversion d'un mouvement linéaire en un mouvement rotatif discontinu, avec implication d'un mécanisme de manoeuvre pas à pas (27), dont l'organe mené (28) est couplé à un organe de réglage, mobile en rotation, du dispositif de réglage, tandis que l'organe menant (26) du mécanisme de manoeuvre pas à pas (27) est relié, avec transmission d'un couple, à un organe de transmission (19) actionné par un levier à main (13), le levier à main (13) étant monté à pivotement autour d'un premier axe de rotation (24), sur un bras support (10),
l'organe de transmission (19) est relié de façon assujettie en rotation à l'organe d'entraînement (26) formant un deuxième axe de rotation (25),
et où, en cas de débattement du bras de charge (16) du levier à main (13), de la valeur d'un angle de pivotement (αH), l'organe de transmission (19), disposé sur un deuxième axe de rotation (25), est passé en un mouvement pivotant augmentant l'angle de rotation (αA) afférent du deuxième axe de rotation (25), supportant l'organe menant (26), du mécanisme de manoeuvre pas à pas (27), par rapport à l'angle de pivotement (αH),
**caractérisée en ce que**
le bras de charge (16) du levier à main (13) présente, à distance de l'axe de rotation (24), sur ses faces de commande (18, 36, 48, 54) des faces longitudinales opposées les unes aux autres, saisies par le dessus ou par le dessous, avec contact, par des organes d'entraînement (21, 40) appartenant à l'organe de transmission (19).

2. Commande à levier selon la revendication 1, **caractérisée en ce que** l'organe de transmission (19) est réalisé sous la forme de levier pivotant (20), relié de façon assujettie en rotation à l'organe menant (26) et susceptible de pivoter dans l'un ou l'autre sens de rotation au moyen du levier à main (13), à l'aide de l'organe d'entraînement (21) saisissant, par le dessus et le dessous le bras de charge (16) du levier à main (13).

3. Commande à levier selon la revendication 2, **caractérisée en ce que** les organes d'entraînement (21) du levier pivotant (20) sont réalisés sous la forme de tétons (22), en saillie du levier pivotant et entrant en contact avec des évidements de commande (18), ménagés sur le bras de charge (16) du levier à main (13).

4. Commande à levier selon la revendication 2 ou 3, **caractérisée en ce que** le levier pivotant (20) présente un bras de rappel (29), sollicité par un organe élastique (30) maintenu localement fixe et susceptible d'être rappelé de toute position angulaire en rotation, pour passer à la position neutre.

5. Commande à levier selon la revendication 4, **caractérisée en ce qu'**est utilisé comme organe élastique (30) un ressort spirale (31), fixé sur le boîtier du mécanisme de manoeuvre pas à pas (27) et saisissant par le dessus et le dessous, avec des doigts élastiques (32) en saillie radicalement, le bras de rappel (29) du levier pivotant (20).

6. Commande à levier selon la revendication 1 ou 2, **caractérisée en ce que** le levier pivotant (20), réalisé sous la forme d'organe de transmission (19), est formé d'un patin à ressort (37), relié à une patte de levier (38) et supportant, avec effet de contact, entre deux branches de ressort (40) disposées à distance l'une de l'autre, un tronçon d'extrémité (35), présentant des faces de commande (36) incurvées, sur le bras de charge (16) du levier à main (13).

7. Commande à levier selon la revendication 6, **caractérisée en ce que** le patin à ressort (37), fixé sur la patte de levier (38) du levier pivotant (20), présente un corps support (42) en forme de U, sur chacune des branches (44, 45), entourant à distance le bras de charge (16) du levier à main (13), duquel est fixée une pince élastique (43) à plusieurs niveaux, entre les éléments de laquelle le bras de charge (16) du levier à main (13) est saisi de façon continue, par des tronçons de contact (46), pendant son mouvement pivotant.

8. Commande à levier selon la revendication 7, **caractérisée en ce que** chaque pince à élastique (43) présente trois tronçons de contact (46) disposés à distance les uns derrière les autres, qui, en devenant de plus en plus étroits, saisissent le bras de charge (16), présentant des saillies de serrage (47), du levier à main (13), avec une force de serrage dont la valeur va en augmentant.

9. Commande à levier selon la revendication 1, **caractérisée en ce que** l'organe de transmission (19) est formé d'un rouleau d'enroulement (51), relié de façon assujettie en rotation au deuxième axe de rotation (25), et d'un ressort d'enlacement (49) entourant celui-ci, et le ressort d'enlacement (49) présente des extrémités de ressort (50) formées en des organes d'entraînement (21) élastiques, entre lesquels est saisie une tête à allure courbe (48) réalisée sur le bras de charge (16) du levier à main (13).

10. Commande à levier selon la revendication 9, **caractérisée en ce que** les organes d'entraînement (21) du ressort à enlacement (49) sont sollicités dans le sens du rappel en position neutre, chaque fois par un organe à ressort (52).

11. Commande à levier selon la revendication 1, **caractérisée en ce que** l'organe de transmission (19) est formé d'un pot formant tambour (53), reliée de façon assujettie en rotation au deuxième axe de rotation (25), et d'un ressort d'enlacement (49) y étant disposé, et le ressort d'enlacement (49) présentant, sur ses extrémités de ressort, des organes d'entraînement (21), en saillie radialement par rapport au centre de tambour et entourés par des griffes (54) disposées sur le bras de charge (16) du levier à main (13).

12. Commande à levier selon la revendication 11, **caractérisée en ce que** la position d'un point de contact (58), formé sur une coulisse (57) déplaçable, est susceptible d'être sélectionnée à dessein par l'opérateur, entre le levier à main (13) et l'organe de transmission (19), à l'aide d'un autre dispositif d'actionnement (55, 56, 57).
